# EUROPEAN PATENT APPLICATION

(11) **EP 1 326 315 A1**
(43) Date of publication of application: **09.07.2003**
(21) Application number: 02380265.5
(22) Date of filing: 18.12.2002
(51) Int. Cl.: H02G 3/10

(54) **Electric mechanism adapter for a raceway holding electrical wires**

(30) Priority: 04.01.2002 ES 200200013 U
(71) Applicant: Aparellaje Electrico S.L., 08903-L'Hospitalet De Llobregat (Barcelona) (ES)
(72) Inventor: Benito Navazo, Juan Manuel, 08290 Sant Cugat del Valles(Barcelona) (ES)
(74) Representative: Curell Aguilà, Mireia

(57) **Abstract**

The invention relates to an adapter for electric mechanisms, such as plug sockets, switches, etc., to a raceway (1) holding electrical wires made up of a base section (2) with grooves (4) for attaching a cover section (5) and an opening (6), the adapter comprising a support base (7), a cover part (19), a casing box (10) and a side closure part (27). Base support (7) consists of a cantilever appendix (11), extending across said opening (6) through an opening (18) in said box (10), and is made up of two arms (12) separated by a separable plate (16), which are provided with partitions (14, 15, 31) for retaining cover part (19) and closure part (27), with said partitions (14, 15, 31) and said parts (19, 27) comprising complementary retention means.

## Description

### Field of the invention

This invention refers to an electric mechanism adapter for a raceway holding electrical conductors, said raceway being of the type known in the market by the name of moulding, where said raceway is made up of a base section with a straight U-shaped cross section provided, lengthways on the outside of its edges, with respective grooves for the releasable attachment of a flattened, straight section cover section which closes off the longitudinal upper opening of said base section, which raceways are connected to electrical mechanisms (plug sockets, various switches, fuses, pilot lights, etc.) by means of a support base of said electrical mechanisms which, being attachable to a fixture and being alongside one point of the raceway, has a casing box for the passive part of the electric mechanism which can be attached to said support base and means for associating said electric mechanism with the electrical conductors contained in the raceway through a portion of the longitudinal upper opening of the base section that is coverless.

### Prior art

In the event it is necessary to install an electric mechanism associated with the electrical conductors held by said moulding raceways, said mechanism must be placed next to the mentioned raceways, since owing to the size of the latter the former cannot be housed in the inside thereof. According to requirements, the electric mechanisms can be arranged at any point on the raceway, either at any point along the length thereof, at the end thereof, at the front or on the side, it being possible to arrange them at various points simultaneously.

In these cases, the said electric mechanisms to be installed are of the surface type, with an opening being made in the box containing them for the passage of the electrical conductors coming from the raceway, in correspondence with another opening made in the adjacent wall of the raceway base section.

In order to overcome the installation problems by fortuitous means, as in the afore-mentioned cases, devices have been developed to rationalise and facilitate the connection of the electrical conductors of the raceway with an electric mechanism so that they can comply with low voltage electric installation standards.

Such devices include those that are the object of Spanish Industrial Designs Nos. ES 9001305 and ES 9001306, wherein the problem is not solved completely, as it is necessary to join together many pieces and even in the latter an opening has to be made in the raceway.

In order to overcome these problems, the adapter device was developed which is the objet of Spanish Utility Model No. ES 9301856, which provides a closure and coverage arrangement made up of a part which, on the one hand, forms a closure covering element for an opening in the casing box of the electric mechanism and, on the other hand, forms a covering element for part of the raceway, comprising areas affected by the cover and walls of the latter, with said part being complemented by a rectangular guide part, which attaches at the top to the grooves of the raceway base section, which has a section of variable passage according to the electrical conductors to be linked with the electric mechanism and has plates for closing the free end of the raceway.

In the case of the latter, the electric mechanism support base cannot be associated directly and integrally with the raceway and with the rectangular guide part; to alter the connection of the mechanism it is necessary to disassemble the whole ensemble and for each position of the electric mechanism, either to the side or the front, a different closure and coverage arrangement must be used.

### Summary of the invention

In order to overcome the cited drawbacks the solution has been adopted whereby the support base is integral with the guide part and whereby the closure and coverage arrangement is separate from other the parts so that it can be disassembled without affecting the rest of the installation, which means the connections can be altered easily.

In accordance with the foregoing solution, the electric mechanisms adapter has been developed which is the object of this invention, that comprises a base support which, located next to one side of the raceway and above the seating plane of same on a fixture, extends in a cantilever appendix which extends across the longitudinal, upper opening of the base section of the adjacent raceway and has adaptable section means for the passage of wires from the raceway, one-way retention means for a cover part, to be applied over the referenced opening in the base section, and means for attaching a closure part for the free end of the raceway, immediately next to said base support, which complements one side of said cover part.

Preferably, the adapter according to the invention is such that the length of the cantilever appendix (11), taken in the projection direction thereof, is shorter or equal to the length of the support base (7) in this same direction, so that said adapter is applied preferably to the raceways of the type having, in plan view, smaller dimensions in comparison with the dimensions, in plan view, of the electric mechanisms to be adapted to the raceway.

Advantageously, said cantilever appendix protrudes through a wide notch provided in the face adjacent to the raceway of the electric mechanism casing box which is mounted on the support base.

Preferably, said cantilever appendix is made up of two flat arms separated from one another and placed symmetrically in a plane parallel to the seating plane of the support base and which are associated therewith by means of respective laminar pillars which extend, in a toggle arrangement, in respective pairs of partitions arranged on said flat arms, with said partitions being parallel to one another and the inner ones being taller than the outer ones. Preferably, it has been provided that the two flat arms are associated to one another by a plate separable therefrom which, with said arms, forms an initial notch for the passage of wires. Also it is provided, preferably, that the larger partition of each flat arm has one-way retention means for the cover piece, with these being formed, preferably, by transverse projections having a saw-tooth cross section.

Advantageously, the cover piece is made up of a laminar part shaped so that the upper surface thereof in the transverse direction complements the wide notch provided on one of the faces of the casing box, having, on the perimeter, two side walls which reach the level of the flat arms, a transverse wall that has two flanges which fit into the exterior groove on the raceway base section and in the perpendicular direction, on the inner face thereof, two wings that coincide with the one-way retention means provided on the larger partitions of the flat arms, it being envisaged, preferably, that this cover piece has in the side walls thereof two small notches for the blunt end of a screwdriver which are located next to the transverse wall.

Another preferable feature of the invention lies in the fact that on the outside of the two partitions of each flat arm and above same, there is a short partition provided with two double edged recesses forming retention means for the closure part of the adjacent end of the raceway.

Preferably, each laminar pillar has a flange to be inserted into the groove of the raceway base section.

Advantageously, the closure part for the end of the raceway is made up of a small box adjustable to said end, extending in a toggled wing which, in the inside thereof, has two barbed teeth and on the outside forms a support step for one of the side walls of the cover piece.

### Brief description of the drawings

Other advantages and features of the invention will become clear from the following non-limiting description, which refers to a preferable embodiment of the invention, with reference to the accompanying drawings, in which:
Figure 1 is an exploded perspective view of the elements making up the adapter of the invention together with a raceway prepared to be attached to the adapter, showing the two faces of the cover piece and omitting the corresponding electric mechanism.
Figure 2 is a perspective view of the elements in the preceding figure joined together, with the exception of the cover piece which is in the stage of being inserted into the wide groove in the casing box before being finally fitted.
Figure 3 is a perspective view of the elements in the preceding figure showing the cover piece fitted.
Figure 4 is a sectional view along the line IV-IV of Figure 3.
Figure 5 is a perspective view of the closure piece for one end of the raceway viewed along its inner face.
Figure 6 is a sectional view according to line VI-VI of Figure 3.
Figure 7 is a plan view of the connection portion between the adapter and the raceway, corresponding to Figure 3, in which the cover piece has been partially sectioned.

### Detailed description of an embodiment of the invention

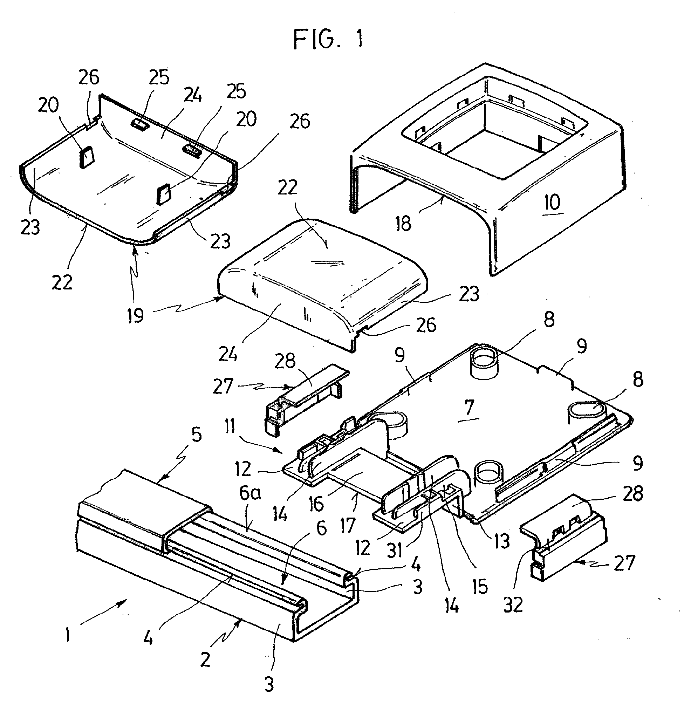

Figure 1 shows the raceway 1 of the moulding type which is made up of a base section 2 with a straight "U" shaped cross section which is provided, lengthways on the outside of the edges of its two walls 3, with respective grooves 4 for the releasable attachment of a cover section 5 having a flattened, straight section which closes off the longitudinal, upper opening 6 of the base section 2, with the exception of an end portion 6a.

The same Figure 1 also shows a support base 7, which comprises means, not shown, for installing an electric mechanism, not shown either, means 8 for the attachment thereof to a fixture, means 9 for attaching a casing box 10 and extends, above the seating plane thereof, in a cantilever appendix 11 which extends across part 6a of longitudinal, upper opening 6 of base profile 2 not provided with cover section 5, with said cantilever appendix 11 being formed by two flat arms 12 which are separated from each other and placed symmetrically in a plane parallel to said seating plane of support base 7 and which are associated therewith by means of respective laminar pillars 13, which arms extend, in a toggle arrangement, in respective pairs of larger inner partitions 14 and smaller outer partitions 15, and are associated together by means of a plate 16 separable from said flat arms 12 which, together with said arms, forms an initial notch 17, defining adaptable section means for the passage of electrical conductors from raceway 1 to the electric mechanism.

Casing box 10 has a wide notch 18 on its face adjacent to raceway 1 in which there is inserted and housed an end of a cover part 19, which is placed above said part 6a of longitudinal opening 6 of base section 2, has one-way retention means, made up of two flange-like wings 20 which interact with transverse projections 21 provided on larger partitions 14 of flat arms 12, as can be seen in Figures 1, 4, 6 and 7 and the upper surface 22 thereof has, according to an arrangement complementing that of the wide notch 18 in casing box 10, two side walls 23, reaching below the level of flat arms 12 and a transverse wall 24 provided with two flanges 25 intended to fit into outside groove 4 of base section 2 of raceway 1.

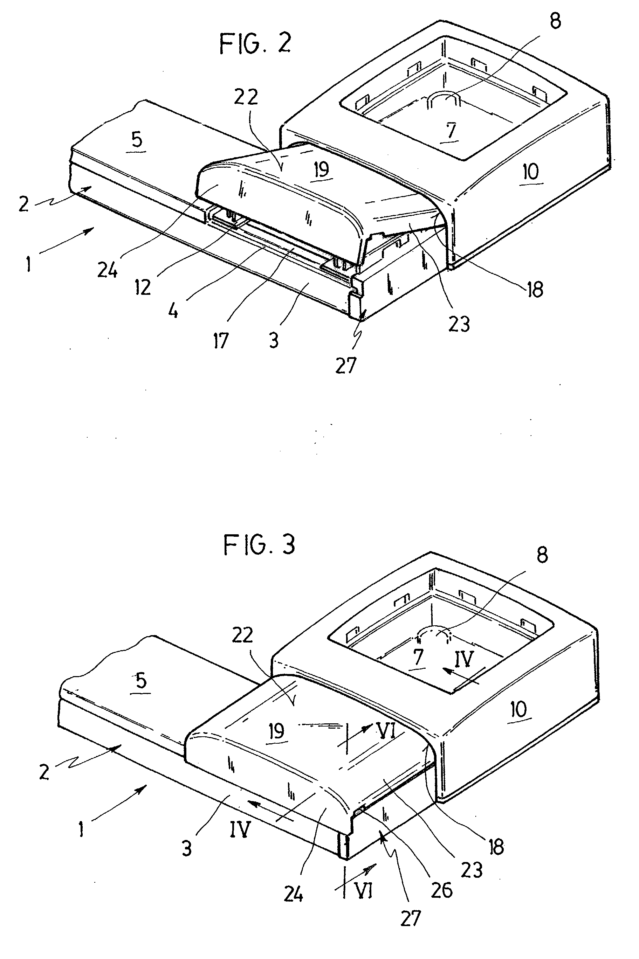

Cover part 19, as can been seen in Figures 2, 3, 4 and 7, is held between cantilever appendix 11, wide notch 18 in casing box 10 and groove 4 of base section 2, said cover piece 19 being provided with small notches 26 suitable for inserting the end of a flat screwdriver and, by leverage, removing said cover piece 19.

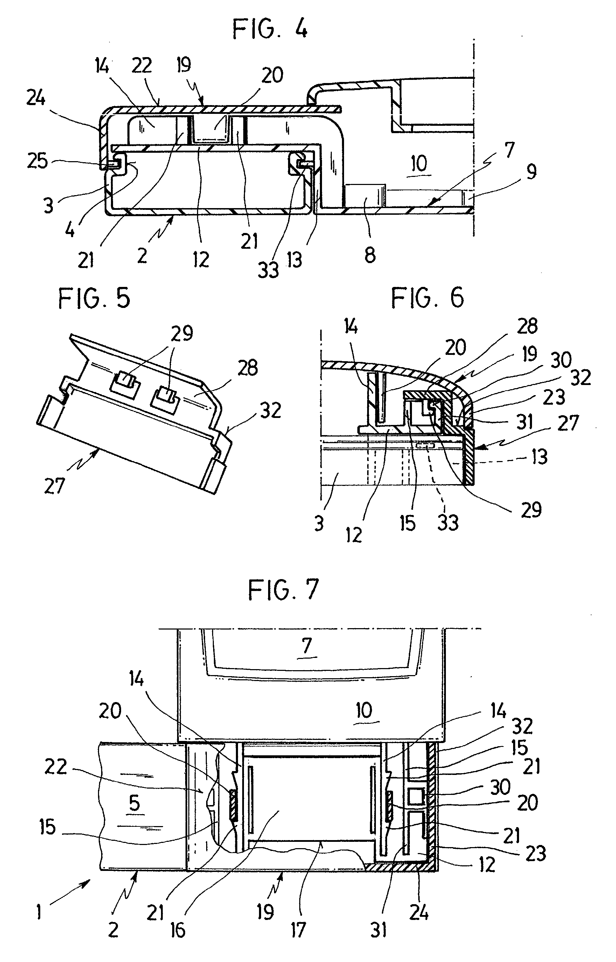

This adapter, as shown in Figures 1, 2, 3, 5, 6 and 7, provides the arrangement of a cover piece 27 which, as can be seen in Figures 1, 5 and 6, is made up of a small box having a toggled wing 28 which, in the inside thereof, is provided with two barbed teeth 29 which fit into two double edged recesses 30 provided on a short partition 31 parallel to said larger partitions 14 and smaller partitions 15 of flat arms 12, as shown in Figures 5, 6 and 7 and, on the outside thereof, is provided with a support step 32 for side walls 23, with all these elements forming the attachment means for said closure part 27.

Moreover, mention should be made of the fact that pillars 13, on their face adjacent to wall 3 of base section 2 of raceway 1, have a flange 33 coinciding with groove 4 of said wall 3.

Finally, as shown in the drawings, given an adapter according to the invention installed next to a raceway 1, as shown without the electric mechanism in Figure 3, it suffices to insert the end of a flat screwdriver in notch 26 to extract flanges 25 from groove 4 and flanges 20 from projections 21 thus allowing cover part 19 to be removed, leaving uncovered the conductors intended for the electric mechanism which can be accessed by removing casing box 10, thus facilitating the exchange or re-connection of said electric mechanism.

## Claims

1. Electric mechanism adapter for a raceway (1) holding electrical wires, said raceway being of the type know as moulding, where said raceway is made up of a base section (2) with a straight "U"shaped section provided, lengthways on the outside of the edges (3) thereof, with respective grooves (4) for the releasable attachment of a cover part (5) having a flattened straight section which closes off the longitudinal upper opening (6) of said raceway (1), which raceways (1) are associated at points thereof with a support base (7) which, being attachable to a fixture and being located alongside one point of the raceway, has a casing box (10) for the passive part of the electric mechanism which can be attached to said support base (7) and means for associating said electric mechanism with the electrical wires contained in raceway (1) through a coverless portion of longitudinal opening (6) in base section (2) of said raceway (1), **characterised in that** it comprises a support base (7) which, being next to one side of raceway (1) and above the seating plane thereof to a fixture, extends in a cantilever appendix (11) which extends across longitudinal upper opening (6) of base section (2) of adjacent raceway (1) and which has adaptable section means (16, 17) for the passage of wires from raceway (1), one-way retention means (20, 21) for a cover part (19), to be applied over said opening (6) of base profile (2), and attachment means (28, 29, 30, 31, 32) for a closure part (27) of the free end of raceway (1), immediately next to said support base (7), which complements a side of said cover part (19).

2. Adapter according to the preceding claim, **characterised in that** the length of cantilever appendix (11), taken in its projection direction, is shorter or equal to the length of support base (7) in this same direction.

3. Adapter according to the previous claim, **characterised in that** cantilever appendix (11) protrudes through a wide notch (18) provided in the face adjacent to raceway (1) of a casing box (10) of the electric mechanism which is assembled on support base (7).

4. Adapter according to any of claims 1 to 3, **characterised in that** cantilever appendix (11) is made up of two flat arms (12) which are separated and placed symmetrically in a plane parallel to the seating plane of support base (7) and are associated therewith by means of respective laminar pillars (13) which extend, in toggle arrangement, in respective pairs of partitions (14, 15) provided on said flat arms (12), with such partitions (14, 15) being parallel to one another and the inner ones (14) being taller that the outer ones (15).

5. Adapter according to claim 4, **characterised in that** two flat arms (12) are associated by a plate (16) separable therefrom which, with said arms, forms an initial notch (17) for the passage of electrical conductors.

6. Adapter according to claims 4 or 5, **characterised in that** the larger partition (14) of each flat arm (12) has one-way retention means (21) for cover part (19).

7. Adapter according to claim 6, **characterised in that** the one-way retention means are made up of transverse projections (21) having a saw-tooth cross section.

8. Adapter according to claims 6 or 7, **characterised in that** cover part (19) is made up of a laminar part shaped so that the upper surface thereof complements in the transverse direction wide notch (18) provided on one of the faces of the casing box, having, on the perimeter, two side walls (23) reaching the level of flat arms (12), a transverse wall (24) provided with two flanges (25) which fit into outside groove (4) of base section (2) of raceway (1) and in the perpendicular direction, on the inside face thereof, two wings (20) coinciding with one-way retention means (21) provided on larger partitions (14) of flat arms (12).

9. Adapter according to any of claims 4 to 8, **characterised in that** on the outside of the two partitions (14, 15) of each flat arm (12) and on same, there is a short partition (31) provided with two double edged recesses (30) which form retention means for closure part (27) of the adjacent end of raceway (1).

10. Adapter according to any of claims 4 to 9, **characterised in that** each laminar pillar (13) has a flange (33) to be inserted in groove (4) on base section (2) of raceway (1).

11. Adapter according to any of claims 8 to 10, **characterised in that** closure part (27) of the end of raceway (1) is made up of a small box adjustable to said end, which extends in a toggled wing (28) which, on the inside thereof, has two barbed teeth (29) and on the outside forms a support step (32) for one of side walls (23) of cover part (19).

12. Adapter according to any of claims 8 to 11, **characterised in that** cover part (19) has on its side wails (23) two small notches (26) for the blunt end of a screwdriver which are located next to transverse wall (24).
